# EUROPEAN PATENT SPECIFICATION

(11) **EP 2 679 778 B1**
(45) Date of publication and mention of the grant of the patent: **21.08.2019**
(21) Application number: 13172423.9
(22) Date of filing: 18.06.2013
(51) Int. Cl.: F01D 21/00, G01B 21/32, G01B 5/20, G01B 11/24

(54) **A method for measuring geometry deformations of a turbine component**
Verfahren zum Messen der Geometrie von Verformungen eines Turbinenbauteils
Procédé de mesure de déformations de la géométrie d'un composant de turbine

(30) Priority: 27.06.2012 US 201261664877 P
(43) Date of publication of application: 01.01.2014
(73) Proprietor: Ansaldo Energia IP UK Limited, London W1G 9DQ (GB)
(72) Inventor: Slowik, Slawomir, 5322 Koblenz (CH); Tscharner, Thomas, 5300 Turgi (CH); Bednarz, Piotr, 8957 Spreitenbach (CH); Prugarewicz, Michal Tomasz, 5406 Ruetihof (CH)
(74) Representative: Bernotti, Andrea

(56) References cited:
- US-A- 5 238 366
- US-A1- 2002 019 708
- US-A1- 2003 063 270
- US-A1- 2011 014 002

## Description

### BACKGROUND OF THE INVENTION

The present invention relates to the technology of turbines. It refers to a method for measuring deformation behavior of rotating components of a compressor stage or turbine stage, such as are used, for example, in compressors, gas turbines or steam turbines.

### PRIOR ART

Rotors and moving blades of heavy-duty gas and high-pressure steam turbines are exposed to high mechanical load by centrifugal forces and to a very high temperature. The temperatures are generally above transition temperatures of the materials involved, so that time-dependent plastic expansion, so-called creeping, is an essential factor, which limits the useful life of the respective components.

Therefore, it is important, in the operation of a plant, to determine the creep behavior or the remaining useful life of costly components of a turbine, such as rotors and moving blades. In this context, on the one hand, safety aspects, and, on the other hand, financial aspects play an important part. Thus, a late replacement of the components leads to a higher safety risk within the plant, while a too early replacement of the components brings about unnecessary costs. It is therefore important, during the operation of a plant of this type, to monitor and estimate the creep behavior of rotating components in compressor stages and turbine stages and to estimate correctly the remaining useful life of these components.

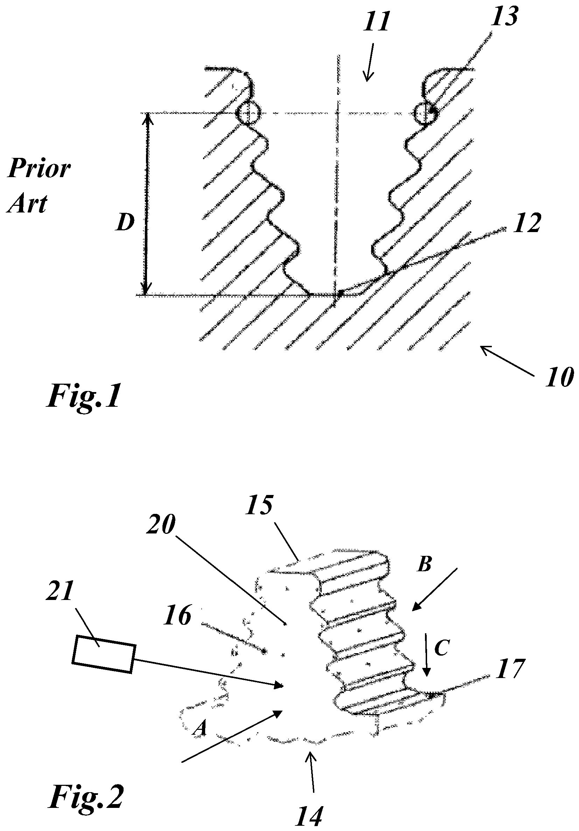

Presently, in order to determine creep measurement, a rotor 10 comprises a rotor groove 11, as shown in Fig. 1, which has a length D from its bottom 12 that is measured twice, first when it is brand-new, by means of a so-called "zero measurement", and a second time during a periodic inspection interval (e.g. during C-inspection). The measurement is done with measuring balls 13. If creep deformation occurs in the rotor groove 11, the length D will increase over time. After a certain operation period, the length D will be greater than the zero measurement length. By comparing the difference between the second measurement of length D to the zero measurement of length D, the creep lifetime deterioration can be determined, generally by using the Finite Element Method (FEM), which uses viscoplastic material models.

However, models of this type require an accurate knowledge of the material constants, boundary conditions and operating conditions, to which the components are subjected during operation. The accuracy of prognosis of these computational models is very limited because of the uncertainties in the specification of these parameters. Thus, the external boundary conditions, in particular the material temperatures during operation, cannot always be specified with sufficient accuracy.

Further there are also accuracy problems, which arise from the surface quality, where the measuring ball 13 is located. Before the measurements can be carried out, all of the surfaces of the rotor groove 11 must be cleaned. The cleaning of the rotor groove 11 is a time- and labor-intensive procedure requiring skilled technicians. After the surfaces are cleaned, the measurements are done manually using calipers. The use of calipers to carry out the measuring by hand leads to certain inaccuracies since the measurements cannot be performed using the exact same points each time.

Document JP 2004044423 discloses a method to detect the state of advancement of creep of a moving blade without disassembling an engine. A notch formed by cutting out ranging from the tip to a specified depth is provided in a seal serration part on a chip shroud to form the moving blade with a creep detection mark. When the creep occurs and advances in the moving blade, the length of the moving blade is extended by a load at the time of rotation, and the seal serration part is gradually worn by its rubbing with a case. Accordingly, the depth of the notch is set so that the advancement of creep of the moving blade can correspond to the worn amount of the seal serration part before the moving blade is led to a breakage. The moving blade with the creep detection mark is inspected with a bore scope in the state of being assembled in a gas turbine engine, and the state of advancement of the creep of the moving blade is determined by whether or not the notch can be viewed on the seal serration part.

An improvement in prognosis can be achieved by the prognosis being checked by means of concrete measurements of the creep damage of the monitored component after various operation periods and, if appropriate, being corrected by adaption of the parameters. This makes it necessary, however, to determine the creep behavior or creep damage of the component by means of nondestructive test methods.

At the present time, however, there are no nondestructive test methods available, which could provide reliable evidence on the creep damage of a component at an early operational stage.

In summary, there have been heretofore no satisfactory methods for either monitoring or determining the remaining creep life of a rotating component of a turbine stage or compressor stage.

Further to the above, US2002/0019708 A1 discloses monitoring creep behaviour in a rotor disk with a test element fastened to it. US 2011/0014002 A1 discloses determining a scanned groove contour and milling it.

### SUMMARY OF THE INVENTION

It is an object of the present invention to provide a method for measuring geometry deformations of a rotor groove with a fir-tree configuration, which avoid the disadvantages of the prior art methods, is easy to apply and gives results of high precision.

This object is obtained by a method according to claim 1.

According to the invention, the method for measuring geometry deformations of a rotor groove with a fir-tree configuration, the rotor groove being a turbine component, comprises the steps of:
providing a fir-tree attachment part and adjacent rotor grooves in various locations on their surfaces with measuring marks, the fir-tree attachment part being located between adjacent rotor grooves;
using the measuring marks as a reference point in determining, in a first measurement, a length on said rotor groove prior to the turbine being placed into service;
operating the turbine for a period of time;
determining, in a second measurement, said length on said rotor groove using again said measuring marks as a reference point, after said operating period; and
comparing the measured lengths of said first and second measurement; and
determining an amount of creep deformation in said rotor groove based on a difference between said measured lengths.

According to another embodiment of the inventive method said rotor groove is provided with measuring marks, when it is newly manufactured.

According to a further embodiment of the inventive method said measuring marks are done as permanent measuring marks.

Specifically, said measuring marks are done by laser engraving.

According to another embodiment of the inventive method said measuring marks are recognizable by the naked eye during inspection of the turbine.

According to just another embodiment of the inventive method said first and second measurements are done by optical methods.

Specifically, said first and second measurements are done by using an optical sensor.

Alternatively, said first and second measurements are done by using a laser sensor.

### BRIEF DESCRIPTION OF THE DRAWINGS

The present invention is now to be explained more closely by means of different embodiments and with reference to the attached drawings.
- Fig. 1: shows an exemplary rotor groove of a rotor and indicates a prior art method of measuring depth variation of said groove;
- Fig. 2: shoes an exemplary fir tree attachment part of a rotor in perspective view with various measuring marks according to an embodiment of the present application;
- Fig. 3: shows a view in direction A of Fig. 2;
- Fig. 4: shows a view in direction B of Fig. 2; and
- Fig. 5: shows a view in direction C of Fig. 2.

### DETAILED DESCRIPTION OF DIFFERENT EMBODIMENTS OF THE INVENTION

As shown in Fig. 2, a rotor 14 is provided with rotor grooves for receiving respective rotor blades. A fir tree attachment part between adjacent grooves is indicated generally by reference numeral 15. The grooves are shown having a general fir-tree configuration to accept a respective root of a blade (not shown) in a conventional manner. Other types of configurations, e.g. hammer root, straight and curved fir-tree, etc. exist.

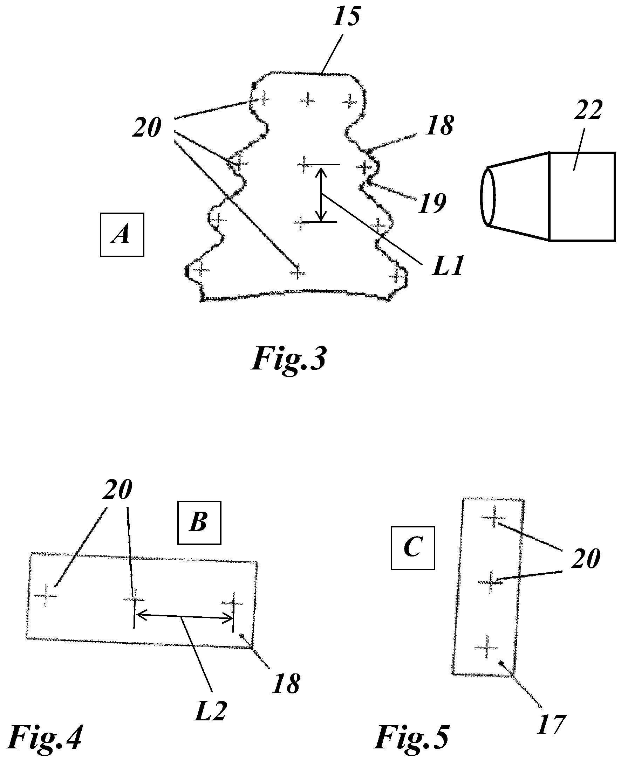

The groove includes (see Fig. 3) non-contact surfaces 18 and contact surfaces 19 as well as a bottom portion 17 (Fig. 2).

According to the invention, the fir tree attachment part 15 and adjacent grooves are marked in various locations on their surfaces with measuring marks 20. These measuring marks 20 are preferably permanent and are formed by laser engraving with a laser engraving tool 21 (Fig. 2), or other suitable method. The measuring marks 20 serve as reference points for carrying out first and second measurements in order to determine any possible creep after the rotor 14 has been used. The marking of the fir tree attachment part 15 and rotor grooves by laser engraving or other suitable method should be performed preferably at the time of manufacture of the rotor 14. It should be noted that a blade root could also be marked in a similar fashion. The positions of the measuring marks 20 are specific to the situation and are placed on faces where low stresses are exhibited. By placing the measuring marks 20 on low stress faces, cooling and mechanical behavior of the rotor or blade are not affected.

The distribution of the measuring marks 20 is shown in greater detail in Figs. 3-5, which depict the views along arrows A-C in Fig. 2. The measuring marks 20 are placed in such positions and are sized so that they are recognizable to the naked eye during periodic inspections. As a result, at every inspection of the machine the pattern is exactly measured and deformations are identified by comparing the respective measurement results with prior measurements. The measurements are generally performed by optical or laser measurement methods, for example by means of an optical sensor 22 (Fig. 3). By ensuring that the measuring marks 20 are identical at each measurement, a more accurate measurement, as compared with current methods, is possible. Owing to this greater accuracy, risk predictions of creep damage for rotors are greatly improved.

In the method of the present invention, at least one measuring mark is provided on the turbine rotor groove (or blade root), and using the at least one measuring mark as a reference in determining in a first measurement a length on the rotor groove (or blade root) prior to the turbine being placed into service. The turbine is then placed into service for a period of time and afterwards, a second measurement, using the at least one measuring mark as a reference, of the same length on the rotor groove (or blade root) after operating of the turbine blade for the period of time is determined. The second measurement is compared to the first measurement, and an amount of creep deformation in the rotor groove (or blade root) is determined based on a difference between the first measurement and the second measurement.

The method of the present invention provides a fast and reliable way to obtain important and more accurate field data, while minimizing down time. The method of the invention is defined in appended independent claim 1.

### LIST OF REFERENCE NUMERALS

- 10: rotor
- 11: rotor groove
- 12: bottom (rotor groove)
- 13: measuring ball
- 14: rotor
- 15: fir tree attachment part (rotor)
- 16: front/back surface
- 17: bottom (rotor groove)
- 18: non-contact surface
- 19: contact surface
- 20: measuring mark
- 21: laser engraving tool
- 22: optical sensor
- A-C: viewing direction
- D: length
- L1,L2: length

## Claims

1. A method for measuring geometry deformations of a rotor groove (11) with a fir-tree configuration, the rotor groove (11) being a turbine component, the method comprising the steps of:
providing a fir-tree attachment part (15) and adjacent rotor grooves (11) in various locations on their surfaces with measuring marks (20), the fir-tree attachment part (15) being located between adjacent rotor grooves (11);
using the measuring marks (20) as a reference point in determining, in a first measurement, a length (L2) on said rotor groove prior to the turbine being placed into service;
operating the turbine for a period of time;
determining, in a second measurement, said length (L2) on said rotor groove using again said measuring marks (20) as a reference point, after said operating period; and
comparing the measured lengths (L2) of said first and second measurement; and
determining an amount of creep deformation in said rotor groove (11), based on a difference between said measured lengths.

2. A method as claimed in claim 1, **characterized in that** said rotor groove (11) is provided with said measuring marks (20), when it is newly manufactured.

3. A method as claimed in claim 1, **characterized in that** said measuring marks (20) are done as permanent measuring marks.

4. A method as claimed in claim 3, **characterized in that** said measuring marks (20) are done by laser engraving (21).

5. A method as claimed in claim 1, **characterized in that** said measuring marks (20) are recognizable by the naked eye during inspection of the turbine.

6. A method as claimed in claim 1, **characterized in that** said first and second measurements are done by optical methods.

7. A method as claimed in claim 6, **characterized in that** said first and second measurements are done by using an optical sensor (22).

8. A method as claimed in claim 6, **characterized in that** said first and second measurements are done by using a laser sensor.

## Patentansprüche

1. Verfahren zur Messung der geometrischen Verformungen einer Rotornut (11) mit einer Tannenbaumkonfiguration, wobei die Rotornut (11) ein Turbinenbauteil ist und das Verfahren folgende Schritte umfasst:
- Bereitstellen eines tannenbaumförmigen Befestigungsteils (15) und benachbarter Rotornuten (11), die an verschiedenen Stellen ihrer Oberflächen Messmarkierungen (20) aufweisen, wobei das tannenbaumförmige Befestigungsteil (15) zwischen benachbarten Rotornuten (11) angeordnet ist;
- Verwenden der Messmarkierungen (20) als Referenzpunkt, um in einer ersten Messung eine Länge (L2) an der Rotornut zu bestimmen, bevor die Turbine in Betrieb genommen wird;
- Betrieb der Turbine für einen bestimmten Zeitraum;
- erneutes Verwenden der Messmarkierungen (20) als Referenzpunkt, um nach dem Betriebszeitraum in einer zweiten Messung die Länge (L2) an der Rotornut zu bestimmen; und
- Vergleichen der Messlängen (L2) der ersten und der zweiten Messung; und
- Bestimmen der Kriechverformung an der Rotornut (11) anhand einer Differenz zwischen den Messlängen.

2. Verfahren nach Anspruch 1, **dadurch gekennzeichnet, dass** die Rotornut (11) bei ihrer Herstellung mit den Messmarkierungen (20) versehen wird.

3. Verfahren nach Anspruch 1, **dadurch gekennzeichnet, dass** die Messmarkierungen (20) als dauerhafte Messmarkierungen ausgebildet sind.

4. Verfahren nach Anspruch 3, **dadurch gekennzeichnet, dass** die Messmarkierungen (20) mittels Lasergravierung (21) hergestellt werden.

5. Verfahren nach Anspruch 1, **dadurch gekennzeichnet, dass** die Messmarkierungen (20) bei der Inspektion der Turbine mit bloßem Auge erkennbar sind.

6. Verfahren nach Anspruch 1, **dadurch gekennzeichnet, dass** die erste und die zweite Messung mittels optischer Verfahren durchgeführt werden.

7. Verfahren nach Anspruch 6, **dadurch gekennzeichnet, dass** die erste und die zweite Messung mittels eines optischen Sensors (22) durchgeführt werden.

8. Verfahren nach Anspruch 6, **dadurch gekennzeichnet, dass** die erste und die zweite Messung mittels eines Lasersensors durchgeführt werden.

## Revendications

1. Procédé de mesure de déformations de la géométrie d'une rainure de rotor (11) présentant une configuration en sapin, la rainure de rotor (11) étant un composant d'une turbine, le procédé comprenant les étapes suivantes :
fournir des repères de mesure (20) à une partie connexion en sapin (15) et adjacente aux rainures de rotor (11) à divers emplacements sur leurs surfaces, la partie connexion en sapin (15) étant située entre des rainures de rotor adjacentes (11) ;
utiliser les repères de mesure (20) en tant que points de référence pour déterminer, dans une première mesure, une longueur (L2) sur ladite rainure de rotor avant que la turbine ne soit mise en service ;
actionner la turbine pendant une période de temps ;
déterminer, dans une seconde mesure, ladite longueur (L2) sur ladite rainure de rotor en utilisant de nouveau lesdits repères de mesure (20) en tant que points de référence, après ladite période d'actionnement ; et
comparer les longueurs mesurées (L2) desdites première et seconde mesures ; et
déterminer une quantité de déformation par fluage dans ladite rainure de rotor (11), sur la base de la différence entre lesdites longueurs mesurées.

2. Procédé selon la revendication 1, **caractérisé en ce que** ladite rainure de rotor (11) est dotée desdits repères de mesure (20), lors d'une fabrication récente.

3. Procédé selon la revendication 1, **caractérisé en ce que** lesdits repères de mesure (20) sont réalisés en tant que repères de mesure permanents.

4. Procédé selon la revendication 3, **caractérisé en ce que** lesdits repères de mesure (20) sont réalisés par gravure au laser.

5. Procédé selon la revendication 1, **caractérisé en ce que** lesdits repères de mesure (20) peuvent être reconnus à l'oeil nu au cours d'une inspection de la turbine.

6. Procédé selon la revendication 1, **caractérisé en ce que** lesdites première et seconde mesures sont réalisées par des procédés optiques.

7. Procédé selon la revendication 6, **caractérisé en ce que** lesdites première et seconde mesures sont réalisées en utilisant un capteur optique (22).

8. Procédé selon la revendication 6, **caractérisé en ce que** lesdites première et seconde mesures sont réalisées en utilisant un capteur laser.
